Europäisches Patentamt

European Patent Office

Office européen des brevets

(11) Numéro de publication: **0 069 007**
**B1**

(12) **FASCICULE DE BREVET EUROPEEN**

(45) Date de publication du fascicule du brevet: **10.06.87**

(51) Int. Cl.⁴: **B 29 C 49/68**

(21) Numéro de dépôt: **82401139.9**

(22) Date de dépôt: **22.06.82**

(54) **Procédé pour la fabrication de récipients en matière plastique étirée et soufflée et machine pour la mise en oeuvre du procédé.**

(30) Priorité: **26.06.81 FR 8112634**

(43) Date de publication de la demande:
**05.01.83 Bulletin 83/01**

(45) Mention de la délivrance du brevet:
**10.06.87 Bulletin 87/24**

(84) Etats contractants désignés:
**AT BE CH DE FR GB IT LI NL SE**

(56) Documents cités:
**EP-A-0 012 426**
**DE-A-1 704 134**
**FR-A-1 307 954**
**FR-A-1 430 899**
**FR-A-2 239 332**
**FR-A-2 256 819**
**FR-A-2 272 818**
**FR-A-2 297 127**
**FR-A-2 331 434**
**FR-E- 83 224**
**US-A-3 283 046**
**US-A-4 141 680**
**US-A-4 313 905**

(73) Titulaire: **Di Settembrini, Antoine**
**Le Lubrier**
**F-84480 Bonnieux (FR)**

(72) Inventeur: **Di Settembrini, Antoine**
**Le Lubrier**
**F-84480 Bonnieux (FR)**

(74) Mandataire: **Descourtieux, Philippe et al**
**CABINET BEAU de LOMENIE 55 rue**
**d'Amsterdam**
**F-75008 Paris (FR)**

Courier Press, Leamington Spa, England.

EP 0 069 007 B1

Description

La fabrication des récipients en matière plastique, et notamment des bouteilles, exige des matériels très automatisés assurant, sans intervention humaine, les différentes phases du processus. On sait, en particulier, qu'il est avantageux d'utiliser comme élément de base des préformes obtenues par extrusion-soufflage ou par tout autre moyen. Ces préformes, sortes d'ébauches cylindriques fermées à l'une de leurs extrémités, sont chauffées à une température convenable et, plus précisément, à des températures variables le long de la préforme. Elles sont ensuite conformées par étirage et soufflage dans un moule de forme appropriée. Après cette opération, il convient d'assurer un refroidissement suffisant du récipient fini avant de le manipuler pour le stocker ou, mieux encore, le diriger vers un poste de remplissage.

Pour permettre une conformation convenable du récipient, la température de la préforme doit être aussi homogène que possible au moment de son entrée dans le moule de conformation. Dans le cas de certaines matières plastiques, la température de la préforme doit être voisine de 118°, non seulement sur les surfaces intérieure et extérieure de sa paroi destinée à subir les opérations d'étirage et de soufflage ("biorientation") mais également et surtout dans l'épaisseur de cette paroi.

Dans la plupart des techniques connues, notamment par les brevets français 1 307 954, 83 224, 1 430 899 et 2 419 810, ainsi que par les brevets américains 3 283 046 et 4 141 680, la préforme, d'abord à la température ambiante, est amenée par chauffage dans un four à une température convenable avant d'être introduite dans le moule de conformation. Mais cette technique antérieure ne permet pas d'obtenir facilement une température homogène sur toute l'épaisseur de la paroi et le temps nécessaire à la fabrication d'un récipient est relativement long.

Dans les brevets français 2.331.434, 2.239.332, 2.256.819 et 2.272.818, ainsi que dans le brevet américain 4.313.905, la fabrication de la préforme par soufflage d'une paraison chaude dans un moule est immédiatement suivie par un refroidissement de la préforme à une température proche de la température de transition du matériau plastique. La préforme subit ensuite une trempe, par contact avec un moule porté à une température convenable ou grâce à un courant d'air chaud ou froid, afin de réduire le gradient de température dans sa paroi. La préforme est enfin conformée en un récipient par étirage et par soufflage dans un moule de forme appropriée.

Toutefois, les procédés proposés par ces divers brevets antérieurs ne permettent pas d'obtenir un contrôle suffisante de la température de la préforme avant sa conformation finale, ce qui conduit à de nombreux défauts de fabrication et, par conséquent, à une perte, quelquefois importante, de matière plastique.

La présente invention concerne donc tout d'abord un procédé de fabrication des récipients en matière plastique extrudée et moulée par étirage et soufflage, selon lequel:

— dans une première étape, on réalise une préforme tubulaire et fermée à son extrémité supérieure, par extrusion-soufflage d'une paraison chaude, dans un moule refroidi de telle façon que la température de la surface extérieure de ladite préforme soit à une première température inférieure à la température d'extrusion, mais supérieure à la température de biorentation

— dans une seconde étape, on refroidit, par contact avec l'atmosphère ambiante, la surface extérieure de ladite préforme jusqu'au voisinage d'une seconde température qui est sensiblement inférieure à la première température

— dans une troisième étape, on réalise une trempe de ladite préforme, immédiatement suivie par son moulage par soufflage et étirage en un récipient.

On vise plus particulièrement à obtenir rapidement un température homogène et précise de la paroi des préformes avant leur introduction dans le moule de conformation des récipients. A cet effet dans la troisième étape du procédé ci-dessus défini et, pour réaliser la trempe, on fait passer les préformes, les unes après les autres, dans une pluralité d'enceintes fermées à leur extrémité supérieure et ouvertes à leur extrémité inférieure, dans chacune desquelles on soumet la surface extérieure de la préforme à un apport contrôle de chaleur par rayonnement, la quantité de chaleur fournie dans chacun des apports étant définie en fonction de l'estimation faite du gradient de température dans l'épaisseur de la paroi de chaque préforme, et pour chaque section horizontale de celle-ci, de façon à obtenir une température aussi voisine que possible de la température de biorentation dans toute l'épaisseur de la paroi de chaque préforme.

Le nombre d'enceintes permettant des apports de chaleur par rayonnement dépend bien entendu du temps de séjour d'une préforme dans chacune d'elles et ce temps peut être très court, par exemple de 5 s ou même inférieur. Il est en fait déterminé par le temps nécessaire au façonnage d'un récipient, lequel dépend à son tour des caractéristiques de fonctionnement du moule de conformation des récipients et de l'efficacité de son dispositif de refroidissement.

Avantageusement, le refroidissement contrôlé de la préforme sera immédiatement précédé de la conformation de cette préforme dans un moule dont le dispositif de refroidissement permet d'abaisser la température de la surface extérieure de la paroi de la préforme à la "première température" definie plus haut. De préférence, également, la conformation de la préforme sera immédiatement précédée de l'extrusion d'une paraison tubulaire verticale à une température convenable en fonction de la matière plastique utilisée cette paraison étant conformée à son extrémité supérieure.

Grâce à ces dispositions, la fabrication des récipients en matière plastique peut être facilement automatisée depuis l'extrusion de la paraison tubulaire jusqu'à la réception des récipients terminés, la cadence de production des récipients pouvant être très élevée.

L'invention a également pour objet une machine pour la mise en oeuvre du procédé ci-dessus défini permettant de bénéficier de tous les avantages de ce procédé et d'assurer une cadence élevée de production.

A cet égard, on sait que la plupart des machines existant actuellement n'assurent pas, de façon automatique, la totalité des opérations exigées par la fabrication des récipients en matière plastique. Plusieurs machines successives sont fréquemment nécessaires ainsi que des interventions humaines intermédiaires, ce qui peut entraîner des risques de pollution, notamment s'il s'agit de récipients destinés à recevoir des produits alimentaires.

L'invention vise donc également une machine ne nécessitant aucune intervention humaine depuis l'extrusion de la paraison et son soufflage pour constituer une préforme jusqu'à l'évacuation du récipient terminé vers un poste d'utilisation ou de stockage. Ainsi, les préformes sont amenées automatiquement aux différents postes de la machine, ce qui contribue encore à l'augmentation de la cadence de production et à sa qualité.

La machine comporte, de façon connue, une chaîne de transfert fermée sur elle-même, dont certains maillons supportent des cannes verticales constituant des éléments de réception des préformes fermées à leur extrémité supérieure, et qui se déplace suivant un trajet horizontal sous l'action d'un mécanisme d'entraînement pas à pas, lesdites cannes étant ainsi amenées successivement sous un dispositif de réalisation de préformes par soufflage de paraisons extrudées puis, après une distance de refroidissement en atmosphère ambiante dans un dispositif de refroidissement contrôlé au moyen d'organes de chauffage, puis dans un dispositif de conformation et, enfin, dans un dispositif de réception des récipients terminés, répartis dans cet ordre le long du trajet fermé de la chaîne de transfert. La machine est caractérisée en ce que le dispositif de refroidissement contrôlé est constitué par une pluralité de cloches chauffantes, sensiblement cylindriques et verticales, fermées à leur extrémité supérieure, qui sont équipées intérieurement de moyens de chauffage permettant d'obtenir toutes répartitions désirées des zones de chauffage en fonction de la position par rapport à l'une des extrémités de la cloche, et qui sont montées sur un support coulissant verticalement suivant un mouvement de va-et-vient d'une amplitude au moins égale à la hauteur des cannes de réception au-dessus de la chaîne de transfert.

La mise en place des préformes sur les cannes de réception s'effectue par gravité, l'ouverture de la préforme étant dirigée vers le bas au moment de sa mise en place sur la canne qu'elle vient coiffer. On conçoit facilement que la chute des préformes sur les cannes peut se faire à la sortie d'une machine d'extrusion-soufflage dont le moule délivre des préformes ayant leur ouverture dirigée vers le bas.

D'autres caractéristiques ainsi que les avantages de l'invention ressortiront de la description qui va suivre d'une machine conforme à l'invention, en référence au dessin annexé, dans lequel:

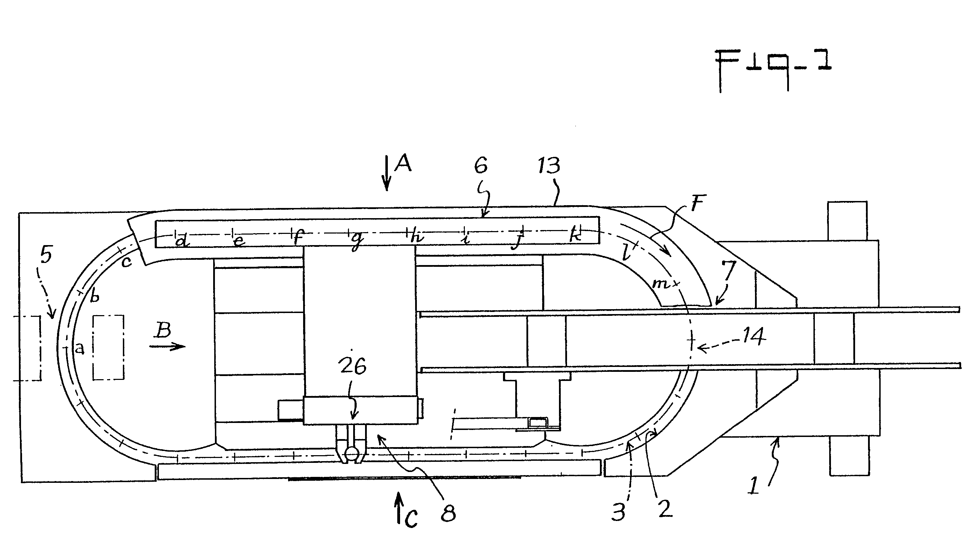

la figure 1 est une vue schématique en plan de la machine;

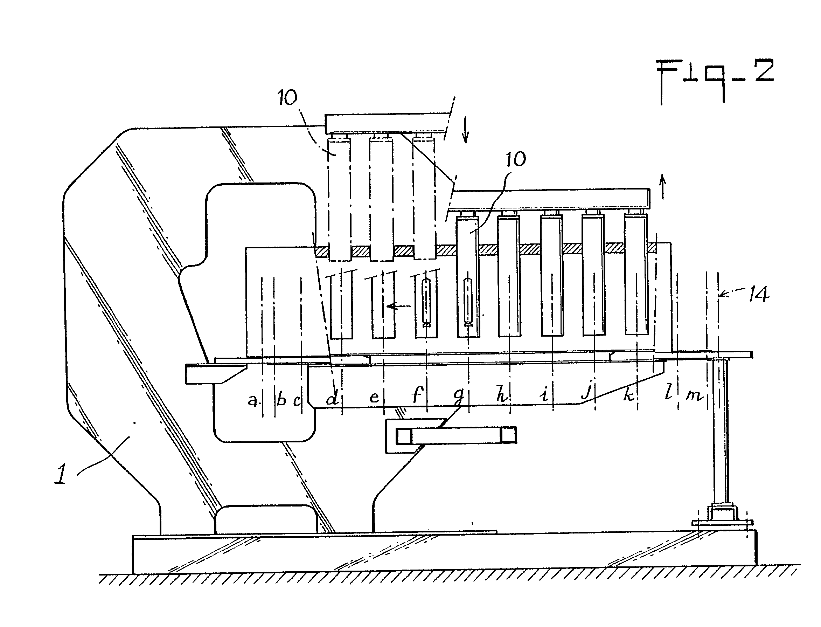

la figure 2 est une vue en élévation suivant la flèche A de la figure 1;

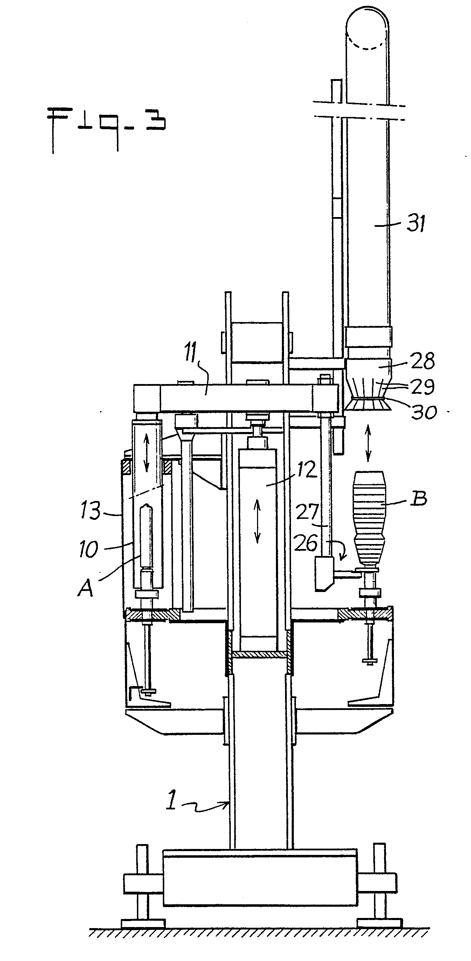

la figure 3 est une vue en élévation suivant la flèche B de la figure 1;

la figure 4 est une vue en élévation suivant la flèche C de la figure 1;

la figure 5 est un diagramme schématique de l'évolution de la température de la surface d'un préforme, dans une section transversale déterminée en fonction du temps, c'est-à-dire également de sa position dans le cycle de la machine.

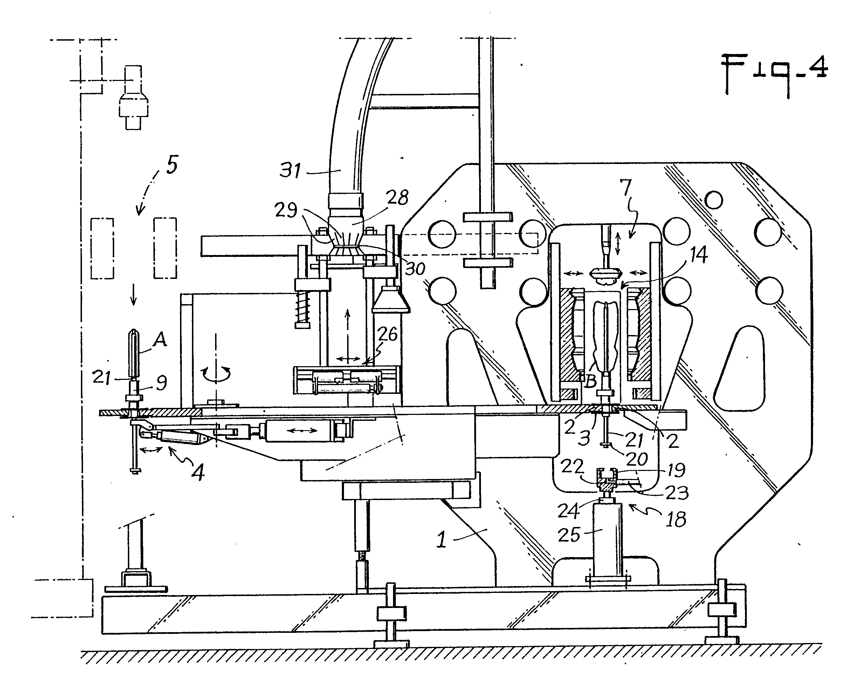

Si l'on se reporte aux dessins, on voit que la machine comporte un bâti 1 présentant un chemin de guidage 2 pour une chaîne de transfert 3 se déplaçant suivant un trajet fermé, dans le sens de la flèche F, sous l'action d'un mécanisme pas à pas 4 (figure 4).

A partir d'un poste de réception des préformes, désigné par la référence générale 5, on rencontre successivement le dispositif 6 de refroidissement contrôlé, le dispositif de conformation 7 et le dispositif de réception 8 des récipients terminés.

Sur certains maillons de la chaîne de transfert 3, de préférence au milieu de ces dernières, sont fixés des supports 9 pour des cannes coulissantes 21, dont une partie au moins s'étend verticalement au-dessus du plan de la chaîne.

Le dispositif 6 de refroidissement contrôlé comporte essentiellement une pluralité de cloches chauffantes 10 sensiblement cylindriques et verticales. Leur extrémité supérieure est fermée, tandis que leur extrémité inférieure est ouverte. Les cloches chauffantes sont fixées sur un support 11 monté coulissant verticalement par rapport au bâti 1. Un vérin 12 hydraulique ou pneumatique est, d'une part, fixé au bâti, d'autre part, attelé à l'un des éléments de support 11. Il permet de commander, dans des conditions que l'on précisera plus loin, un mouvement vertical de va-et-vient du support 11.

Les cloches chauffantes 10 sont équipées intérieurement de résistances électriques permettant d'obtenir toute température désirée. Toutefois, il faut souligner qu'il est avantageux de pouvoir régler le chauffage dans chaque cloche indépendamment du réglage dans la cloche voisine. Bien plus, dans une cloche, il sera avantageux de prévoir une répartition judicieuse des zones de chauffage et, par conséquent, des zones de température en fonction de la position par rapport à l'une des extrémités de la cloche. On sait en effet que certains récipients, et notamment certaines zones de ces récipients, doivent subir une biorentation au moment de la conformation, ce qui exige une répartition très précise des températures le long de la préforme. Le rôle précis des cloches chauffantes pour le refroidissement contrôlé des préformes sera exposé plus loin.

De préférence, l'ensemble des cloches chauffantes 10 évolue dans un carter calorifugé 13; qui leur assure une isolation thermique au moins lorsqu'elles sont en position basse.

A la sortie du dispositif 6 de refroidissement contrôlé se trouve le dispositif de conformation 7. Il comporte essentiellement un moule 14 en trois parties visibles plus particulièrement sur la figure 4. Les deux parties inférieures du moule présentant de façon connue des empreintes en creux correspondant aux formes des flancs du récipient, notamment de son orifice; elles sont attelées à un mécanisme classique à genouillère non représenté.

Le dispositif de conformation 7 est associé à un dispositif d'étirage et de soufflage désigné par la référence générale 18. Il comporte essentiellement une tête 19 susceptible de recevoir l'embout 20, de forme correspondante, de l'extrémité inférieure d'une canne creuse 21 montée coulissante dans son support 9. Dans la tête 19 est prévu un conduit 22 susceptible d'être relié à une source d'air comprimé au moyen de la canalisation 23. Lorsque la tête 19 est appuyée sur l'ambout 20, le conduit 22 communique de façon étanche avec l'intérieure de la tige creuse 21 dont l'extrémité supérieure est arrondie et présente au moins un orifice débouchant à l'extérieur de la tige.

La tête 19 est montée à l'extrémité supérieure de l'élément mobile 24 d'un vérin 25 fixé au bâti, coaxialement au moule 14 dans sa position de fermeture.

Après le dispositif de conformation 7 et toujours dans le sens du déplacement de la chaîne de transfert 3 suivant la flèche F, on rencontre le dispositif de réception des récipients terminés.

Il comporte essentiellement un mécanisme d'enlèvement des récipients constitué dans l'exemple représenté par une pince 26 située au-dessus de la chaîne de transfert dans la zone où, comme on le verra plus loin, se trouve l'orifice du récipient terminé à enlever de la canne 21 qui le supporte.

Le support 27 de la pince 26 est monté coulissant verticalement par rapport au bâti de la machine sur une amplitude au moins égale à la hauteur d'un récipient terminé. Un mécanisme d'entraînement assure le mouvement de va-et-vient de ce support 27.

De préférence, cependant, et comme représenté sur les dessins, le support 27 de la pince 26 est solidaire du support 11 des cloches chauffantes. Le vérin 12 assure donc son mouvement de va-et-vient dans des conditions que l'on précisera plus loin.

A la verticale de la zone de préhension de la pince 26 se trouve une goulotte 28 dont l'orifice d'entrée est dirigé vers le bas. Cette goulotte dans laquelle les récipients terminés sont appelés à pénétrer est équipée d'un dispositif de freinage évitant aux récipients de retomber sous leur propre poids. A cet effet, dans l'exemple représenté, la goulotte est constituée par une pluralité de lames flexibles 29 définissant un passage dont le diamètre est inférieur au diamètre extérieur d'un récipient. De préférence, ou jonc élastique 30 coopère avec les lames flexibles pour maintenir un passage étroit à l'entrée de la goulotte 28. Celle-ci est, d'autre part, prolongée vers le haut par un tube 31 dont le diamètre intérieur est sensiblement supérieur au diamètre extérieur des récipients terminés. Le trajet du tube 31 présente ensuite des sinuosités convenables pour amener les récipients qu'il conduit vers un poste de stockage ou de remplissage.

Le fonctionnement de la machine est alors le suivant.

La chaîne de transfert 3 étant entraînée par son mécanisme pas à pas 4, une préforme A est placée sur chaque canne 21 qu'elle vient coiffer. Comme on l'a indiqué plus haut, la préforme tombe par gravité d'un appareil de fabrication 5 de préformes du type extrusion-soufflage. Il est essentiel cependant que cet appareil délivre des préformes dont l'extrémité inférieure est ouverte, tandis que leur extrémité supérieure est fermée. Lorsqu'elle tombe sur la canne 21, la préforme présente à la surface extérieure de sa paroi une température égale à la "première température" définie plus haut, par exemple 140°C. Un telle température peut résulter, en particulier, de l'existence d'un dispositif de refroidissement dans le moule de conformation des préformes, par extrusion-soufflage. La paraison tubulaire qui alimente ce moule est en général à une température d'environ 180°C.

La préforme A est ensuite emportée par la canne 21 qu'elle coiffe dans le dispositif 6 de refroidissement contrôlé. Pendant le déplacement de la chaîne de transfert 3, le support 11 des cloches chauffantes 10 est maintenu en position haute par son vérin 12. Dès que la préforme A est arrivée à la verticale de la première cloche 10, le vérin 12 fait descendre le support 11 et la première cloche vient, à son tour, coiffer la préforme A. Après une temporisation appropriée, par exemple de quelques secondes, le vérin 12 fait remonter l'ensemble des cloches chauffantes. Le trajet des préformes est alors libéré et la chaîne de transfert 3 peut amener la préforme A sous la deuxième cloche 10. Le cycle se poursuit jusqu'à ce que la préforme A ait atteint la dernière cloche.

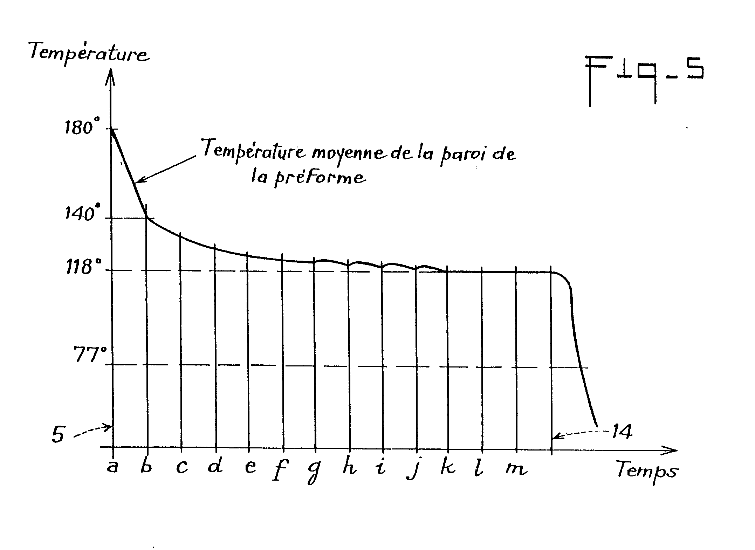

Avant d'aborder la phase de conformation des récipients il convient de préciser le rôle des cloches chauffantes 10 constituant en fait un dispositif de refroidissement contrôlé des préformes. A cet effet, on se référera plus spécialement à la figure 5; on a supposé, dans la représentation schématique, que le passage d'une position n à la position n+1 s'effectue instantanément au moment où la préforme atteint sa température la plus basse à la position n.

Comme on l'a indiqué plus haut, la température de peau (surface extérieure de la paroi) d'une préforme est égale à la "première température" définie mous haut, par exemple voisine de 140°C, au moment où cette préforme arrive sur une canne 21 (position c). Cette température est, dans le cas de la machine ici décrite, celle obtenue par le refroidissement du moule 5 de conformation des préformes.

Cependant, la température de la surface intérieure de la paroi est alors supérieure à cette "premiere temperature" et au centre de la paroi la température est restée voisine de la température d'extrusion, soit environ 180°C.

Il existe donc une hétérogénéité des températures dans l'épaisseur de la paroi qu'il est indispensable de supprimer ou tout au moins d'atténuer avant d'aborder la phase de formation des récipients, laquelle doit être effectuée à la température de biorentation, par exemple aux environs de 118°C, dans le cas de certaines matières plastiques.

Dans une première phase, jusqu'à la position c, la préforme est transportée à l'air libre et sa temperature de peau s'abaisse. Toutefois, le gradient de temperature dans l'épaisseur reste encore important.

A partir de la position d jusqu'à la position m incluse, la préforme pénètre dans le dispositif 6 de refroidissement contrôlé où elle est coiffée successivement par chacune des huit cloches 10 décrites plus haut (positions d à k).

La première cloche (position d) fournit un apport de chaleur par rayonnement à la surface extérieure de la paroi de la préforme. De même, les choches suivantes fourniront des apports de chaleur par rayonnement. Tout ceci peut être obtenu de façon précise et contrôlée et simultanément permet une perte de la chaleur emmagasinée dans la paroi de la préforme par conduction depuis le centre jusqù la face extérieure.

La différence de température entre les deux surfaces, extérieure et intérieure, de la paroi tend à diminuer, voir à s'annuler, cependant que la température de ces surfaces se rapproche de à la température finale.

Enfin, la dernière cloche (position k) et le transfert aux positions l et m, situées dans le carter calorifugé 13, permettent d'assurer un "lissage" des températures qui sont alors voisines de 118°C.

Le refroidissement qui est opéré dans le dispositif 6 est fonc relativement long et on dispose de nombreux paramètres pour obtenir le résultat désiré, notamment en fonction de la matière plastique utilisée et de la forme du récipient final. Ceci n'empêche pas que la cadence de production peut être élevée, par exemple 750 récipients/heure, puis qu'elle dépend uniquement du temps, de l'ordre de quelques secondes, pendant lequel une préforme séjourne dans une position déterminée.

A sa sortie du carter calorifugé 13, la préforme pénètre directement dans le moule de conformation 14. Celui-ci est bien entendu ouvert pendant le déplacement de la chaîne de transfert 3 mais se ferme dès l'immobilisation de cette dernière.

Au moment où la canne 21 portant la préforme A est arrivée dans l'axe vertical du moule 14, son embout inférieur 20 s'est engagé par translation, dans la tête 19 du dispositif d'étirage et de soufflage. La canne 21 est donc solidaire, en translation verticale, de l'élément mobile 24 du vérin 25.

Dès la fermeture du moule 14, le vérin 25 soulève la canne 21 qui coulisse dans son support 9, cependent que son extrémité supérieure arrondie tire l'extrémité supérieure de la préforme jusqu'à toute hauteur convenable, éventuellement jusqu'à ce qu'elle vienne en appui sur le fond supérieur du moule. Cet étirage axial est possible puisque, lors de sa fermeture, le moule serre fermement l'extrémité inférieure de la préforme sur le support 9 et l'immobilise dans le sens vertical.

En même temps que se produit l'étirage axial de la préforme, la canalisation 23 délivre de l'air comprimé à l'orifice de l'extrémité supérieure de la canne 21 par l'intermédiaire du conduit 22 raccordé de façon étanche à l'espace intérieur de la canne 21. La préforme est alors soufflée et repoussée contre les parois du moule où elle est simultanément conformée et refroidie.

Les opérations de conformation étant terminées, le moule 14 s'ouvre, libérant le passage de la canne 21 portant un récipient terminé B. Simultanément, le vérin 25 amorce sa descente, libérant l'embout 20 de la tête 19 et permettant à celui-là de sortir de celle-ci dès le déplacement de la chaîne de transfert 3.

La canne 21 est alors amenée pas à pas jusqu'au dispositif de réception des récipients terminés. Pendant le trajet, le récipient continue à se refroidir.

Lorsque la canne 21 et son récipient B arrivent à la verticale de la goulotte 28, la pince 26 et son support 27 se trouvent en position haute, les mâchoires de la pince étant ouvertes. Dès l'arrêt de la chaîne de transfert, le vérin 12 fait descendre le support 27 et sa pince 26 dont les mâchoires viennent se refermer à la partie inférieure du récipient B, autour de l'orifice de celui-ci.

Lorsque le support 27 remonte, la pince 26 entraîne le récipient B en le dégageant de la canne 21. Le fond du récipient B se présente alors à l'entrée de la goulotte 28 et il repousse l'orifice du récipient préalablement déposé et immobilisé par le dispositif de freinage de la goulotte. A la fin du mouvement vers le haut du support 27, le récipient B a pris la place du précédent et se trouve, à son tour, immobilisé sous la pression des lames flexibles 29 et du jonc 30. Les mâchoires de la pince 26 s'ouvrent enfin et le dispositif d'enlèvement des récipients est alors prêt à reprendre le récipient terminé suivant. Ainsi, le train de récipients terminés se déplace pas à pas dans le tube 31 jusqu'au poste d'utilisation sans aucun risque de pollution.

La canne 21 libérée de son récipient revient pas à pas au poste de réception des préformes. Sur son trajet, l'embout inférieur 20 rencontre un guide fixé au bâti qui permet la descente complète de la canne 21 dans son support 9, rendant cette dernière apte à recevoir une nouvelle préforme.

## Revendications

1. Procédé de fabrication de récipients tels que des bouteilles en matière plastique extrudée et moulée par étirage et soufflage, selon lequel

— dans une première étape, on réalise une préforme tubulaire et fermée à son extrémité supérieure, par extrusion-soufflage d'une paraison chaude, dans un moule refroidi de telle façon que la température de la surface extérieure de ladite préforme soit à une première température inférieure à la température d'extrusion, mais supérieure à la température de biorentation

— dans une seconde étape, on refroidit, par contact avec l'atmosphère ambiante, la surface extérieure de ladite préforme jusqu'au voisinage d'une seconde température qui est sensiblement inférieure à la première température

— dans une troisième étape, on réalise une trempe de ladite préforme, immédiatement suivie par son moulage par soufflage et étirage en un récipient, caractérisé en ce que pour réaliser la trempe, on fait passer les préformes, les unes après les autres, dans une pluralité d'enceintes fermées à leur extrémité supérieure et ouvertes à leur extrémité inférieure, dans chacune desquelles on soumet la surface extérieure de la préforme à un apport contrôlé de chaleur par rayonnement, la quantité de chaleur fournie dans chacun des apports étant définie en fonction de l'estimation faite du gradient de température dans l'épaisseur de la paroi de chaque préforme, et pour chaque section horizontale de celle-ci, de façon à obtenir une température aussi voisine que possible de la température de biorentation dans toute l'épaisseur de la paroi de chaque préforme.

2. Procédé selon la revendication 1, caractérisé en ce que la troisième étape comporte au moins huit apports de chaleur par rayonnement ou radiation.

3. Machine pour la mise en oeuvre du procédé selon l'une quelconque des revendications 1 et 2, comportant une chaîne de transfert (3) fermée sur elle-même, dont certains maillons supportent des cannes verticales (21) constituant des éléments de réception des préformes, fermées à leur extrémité supéreiure, des récipients, et qui se déplace suivant un trajet horizontal sous l'action d'un mécanisme (4) d'entraînement pas à pas, lesdites cannes (21) étant ainsi amenèes successivement sous un dispositif de réalisation de préformes par soufflage de paraisons extrudées puis, après une distance de refroidissement en atmosphère ambiante, dans un dispositif (6) de refroidissement contrôlé au moyen d'organes de chauffage, puis dans un dispositif de conformation (7) et enfin dans un dispositif de réception (8) des récipients terminés, répartis dans cet ordre le long du trajet fermé de la chaîne de transfert (3), caractérisée en ce que le dispositif (6) de refroidissement contrôlé est constitué par une pluralité de cloches chauffantes (10) sensiblement cylindriques et verticales, fermées à leur extrémité supérieure, qui sont équipées intérieurement de moyens de chauffage permettant d'obtenir toutes répartitions désirées des zones de chauffage en fonction de la position par rapport à l'une des extrémités de la cloche et qui sont montées sur un support (11) coulissant verticalement suivant un mouvement de va-et-vient d'une amplitude au moins égale à la hauteur des cannes de réception (21) au-dessus de la chaîne de transfert (3).

4. Machine selon la revendication 3, caractérisée en ce que chaque cloche chauffante (10) est équipée de moyens de chauffage à réglage indépendant, par rayonnement.

5. Machine selon la revendication 3, caractérisée en ce que l'ensemble des cloches chauffantes (10) est disposé, au moins dans sa position basse, dans un carter d'isolation thermique (13).

6. Machine selon l'une quelconque des revendications 3 à 5, caractérisée en ce que le dispositif de réception (8) des récipients comprend un mécanisme d'enlèvement (26) des récipients des cannes, disposé en regard d'une goulotte (28) dont l'ouverture, dirigée vers le bas, est munie d'un organe de freinage (29, 30) des récipients et qui est prolongée par un tube (31) s'étendant d'abord verticalement, puis suivant tout trajet sinueux approprié.

7. Machine selon les revendications 3 et 6, caractérisée en ce que le support (11) des cloches chauffantes est solidaire de celui (27) du mécanisme d'enlèvement (26) des récipients, ce support (11) étant attelé à un vérin (12), dont l'élément fixe est lié au bâti de la machine.

## Patentansprüche

1. Verfahren zur Herstellung von Behältern, wie Flaschen, aus extrudiertem und geformtem Plastikmaterial durch Recken und Blasen, bei welchem

— in einer ersten Stufe ein rohrförmiger, an seinem oberen Ende geschlossener Vorformling durch Extrusionsblasen aus einem heißen Rohling in einer Form hergestellt wird, die derart gekühlt wird, daß die Temperatur der Außenfläche des Vorformlings eine erste Temperatur niedriger als die Extrusionstemperatur, aber höher als die Temperatur bei der biaxialen Reckung aufweist,

— in einer zweiten Stufe die Außenfläche des Vorformlings durch Kontakt mit der umgebenden Atmosphäre bis in Nähe einer zweiten Temperatur, die im wesentlichen niedriger als die erste Temperatur ist, abgekühlt wird,

— in einer dritten Stufe eine Abkühlung des Vorformlings und unmittelbar darauf seine Formung durch Blasen und Recken in einen Behälter vorgenommen wird, dadurch gekennzeichnet, daß man für die Abkühlung die Vorformlinge nacheinander in eine Mehrzahl von an ihrem oberen Ende geschlossenen und an ihrem unteren Ende offenen Gehäusen führt, in denen man jeweils die Außenfläche des Vorformlings einer kontrollierten Wärmezufuhr durch Strahlung aussetzt, wobei die Menge an bei jeder der Zufuhren gelieferter Wärme als Funktion einer Veranschlagung des Temperaturgradienten in der Dicke der Wand jedes Vorformlings und für jeden horizontalen Abschnitt derselben festgelegt wird, sodaß eine Temperatur erreicht wird, die so nahe wie möglich der Temperatur bei der biaxialen Rekkung in der gesamten Wanddicke jedes Vorformlings ist.

2. Verfahren nach Anspruch 1, dadurch gekennzeichnet, daß die dritte Stufe mindestens acht Wärmezufuhren durch Strahlung oder Radiation umfaßt.

3. Maschine zur Durchführung des Verfahrens nach einem der Ansprüche 1 und 2, mit einer in sich geschlossenen Förderkette (3), von welcher gewisse Kettenglieder vertikale, Aufnahmeelemente für die an ihrem oberen Ende geschlossenen Vorformlinge der Behälter bildende Rohrstäbe (21) tragen und die sich entlang einer horizontalen Bahn unter der Wirkung eines schrittweisen Antriebsmechanismus (4) fortbewegt, wodurch die Rohrstäbe (21) nacheinander unter eine Einrichtung zur Herstellung von Vorformlingen durch Blasen von extrudierten Rohlingen, dann, nach einer Abkühlstrecke in umgebender Atmosphäre, in eine Einrichtung (6) zum kontrollierten Abkühlen mittels Heizorganen, dann in eine Formgebungseinrichtung (7) und schließlich in eine Einrichtung (8) zur Aufnahme der fertigen Behälter gebracht werden, welche in dieser Reihenfolge entlang der geschlossenen Bahn der Förderkette (3) verteilt sind, dadurch gekennzeichnet, daß die Einrichtung (6) zum kontrollierten Abkühlen durch eine Mehrzahl von im wesentlichen zylinderförmigen und vertikalen Heizglocken (10) gebildet ist, die an ihrem oberen Ende geschlossen und innen mit Heizmitteln versehen sind, zwecks Erzielung jeder gewünschten Aufteilung der Heizzonen als Funktion der Position in bezug auf eines der Enden der Glocke, und die an einem Träger (11) montiert sind, der entsprechend einer Hin- und Herbewegung um eine Amplitude, die mindestens gleich der Höhe der Aufnahme-Rohrstäbe (21) ist, über der Förderkette (3) vertikal verschiebbar ist.

4. Maschine nach Anspruch 3, dadurch gekennzeichnet, daß jede Heizglocke (10) mit Heizmitteln mit separater Regelung durch Strahlung ausgestattet ist.

5. Maschine nach Anspruch 3, dadurch gekennzeichnet, daß die Gesamtheit der Heizglocken (10) zumindest in ihrer unteren Position in einer Kammer (13) mit Wärmeisolierung angeordnet ist.

6. Maschine nach einem der Ansprüche 3 bis 5, dadurch gekennzeichnet, daß die Einrichtung (8) zur Aufnahme der Behälter einen Mechanismus (26) zum Abheben der Behälter von den Rohrstäben umfaßt, welcher gegenüber einem Ablauf (28) angeordnet ist, dessen nach unten gerichtete Öffnung mit einem Organ (29, 30) zum Abbremsen der Behälter versehen ist und der durch ein Rohr (31) verlängert ist, welches sich zuerst vertikal, dann entlang irgendeiner geeigneten Kurvenbahn erstreckt.

7. Maschine nach den Ansprüchen 3 und 6, dadurch gekennzeichnet, daß der Träger (11) für die Heizglocken mit jenem (27) des Mechanismus (26) zum Abheben der Behälter verbunden ist, wobei dieser Träger (11) an einem Stelltrieb (12) angelenkt ist, dessen fixes Element am Rahmen der Maschine befestigt ist.

**Claims**

1. Process for the manufacture of containers such as bottles in extruded and molded plastic material, by drawing and blowing, according to which

— a first step consists in producing a tubular preform which is closed at its upper end, by extrusion-blow moulding of a hot parison, in a mold cooled in such a way that the temperature of the external surface of said preform is at a temperature lower than the extruding temperature, although higher than the biorientation temperature,

— a second step consists in cooling by contact with the ambient atmosphere, the external surface of said preform down to around a second temperature which is substantially lower than the first temperature,

— a third step consists in carrying out a hardening of said preform, followed immediately by its blow-molding and drawing into a container, characterized in that to perform the hardening operation, the preforms are caused to pass, one after the other, through a plurality of enclosures which are closed at their upper end and open at their lower end, in each one of which enclosures the external surface of the preform is subjected to a controlled intake of heat by radiation, the quantity of heat supplied in each of such intakes being defined as a function of the estimation made of the gradient of temperature through the thickness of the wall of each preform, and for every cross-section thereof, so as to obtain a temperature as near as possible to the temperature of biorentation throughout the thickness of the wall of each preform.

2. Process according to Claim 1, characterized in that the third step comprises at least eight intakes of heat by radiation.

3. Machine for carrying out the process according to any one of claims 1 and 2, comprising a conveyor chain closed over itself (3), some links of which support vertical pins (21) which constitute elements adapted to receive the preforms, closed at their upper end, of the containers, and which is moved along a horizontal path by a step- by-step drive mechanism (4), said pins (21) being thus brought successively under a device for making the preforms by blowing extruded parisons, then over a cooling distance in ambient atmosphere and into a cooling device (6) controlled by means of heating members, and into a shaping device (7), and finally into a device (8) adapted to receive the finished containers, all said devices being positioned in that order along the closed path of the conveyor chain (3), characterized in that the controlled cooling device (6) is constituted by a plurality of heating bells (10) which are substantially cylindrical and vertical, closed at their upper end and equipped on the inside with heating means which make it possible to obtain any wanted distribution of the heating zones as a function of the position with respect to one of the ends of the bell and which are mounted on a support (11) sliding vertically in a reciprocating movement of amplitude at least equal to the height of the receiving pins (21) above the conveyor chain (3).

4. Machine according to claim 3, characterized in that each heating bell (10) is equipped with independently controlled heating means, using radiation.

5. Machine according to claim 3, characterized in that the assembly of heating bells (10) is disposed, at least in its low position, in a heat-insulating housing (13).

6. Machine according to any one of claims 3 to 5, characterized in that the containers-receiving device (8) comprises a mechanism (26) for removing the containers from the pins, which mechanism is situated opposite a gullet (28), of which the opening, facing downwardly, is equipped with containers-braking means (29, 30) and is extended by a tube (31) which extends first vertically, then according to any appropriate winding path.

7. Machine according to claims 3 and 6, characterized in that the support (11) for the heating bells is fast with the support (27) of the containers-removing mechanism (26), said support (11) being coupled to a jack (12), the fixed element of which is joined to the frame of the machine.

Fig-1

Fig-2

14

10

10

11

1

a b c d e f g h i j k l m

Fig.3

Fig.4

Fig-5

Température

180°

Température moyenne de la paroi de la préforme

140°

118°

77°

5

14

a b c d e f g h i j k l m

Temps

0 069 007